Europäisches Patentamt

European Patent Office

Office européen des brevets

(11) Veröffentlichungsnummer: **0 259 512**
**B1**

# EUROPÄISCHE PATENTSCHRIFT

(12)

(45) Veröffentlichungstag der Patentschrift:
**22.03.89**

(21) Anmeldenummer: **86112595.3**

(22) Anmeldetag: **11.09.86**

(51) Int. Cl.⁴: **G01S 15/10**, G01S 7/52

(54) Verfahren und Vorrichtung zur Bestimmung der Ankunftzeit eines Schallimpulses.

(43) Veröffentlichungstag der Anmeldung:
**16.03.88 Patentblatt 88/11**

(45) Bekanntmachung des Hinweises auf die Patenterteilung:
**22.03.89 Patentblatt 89/12**

(84) Benannte Vertragsstaaten:
**CH DE FR GB LI**

(56) Entgegenhaltungen:
**EP-A- 0 004 626**
**EP-A- 0 180 652**
**EP-A- 0 225 938**
**WO-A-81/02472**
**US-A- 2 818 505**

(73) Patentinhaber: **Honeywell Regelsysteme GmbH,
Kaiserleistrasse 55, D-6050 Offenbach am Main(DE)**

(72) Erfinder: **Drefahl, Dieter, Dr., Pferdslache 13,
D-6450 Hanau(DE)**

(74) Vertreter: **Herzbach, Dieter et al, Honeywell Europe S.A.
Holding KG Patent- und Lizenzabteilung
Kaiserleistrasse 55 Postfach 184, D-6050 Offenbach am
Main(DE)**

ACTORUM AG

# Beschreibung

Die vorliegende Erfindung bezieht sich auf ein Verfahren nach dem Oberbegriff des Patentanspruches 1 sowie auf eine Vorrichtung zur Durchführung dieses Verfahrens.

Eine mit Ultraschall arbeitende Abstands-Meßeinrichtung, die von dem gattungsgemäßen Verfahren Gebrauch macht, ist aus der WO-A 8 102 472 bekannt. Dort wird ein Wandler während vorgegebener Sendeperioden mit einem impulsmodulierten Schwingungssignal erregt und beim Empfang eines reflektierten Schallimpulses durch den gleichen Wandler wird das entsprechende elektrische Ausgangssignal einer auf die Trägerfrequenz des Schwingungssignales abgestimmten Phasenverriegelungsschaltung zugeführt. Mit dem Einrasten der Phasenverriegelungsschaltung wird ein Zähler gestoppt, in den mit Beginn der Schallaussendung Impulse eingezählt wurden. Der erreichte Zählstand ist dann ein Maß für den Abstand eines Objektes, an dem der Schallimpuls reflektiert wurde. Bei dieser bekannten Vorderflankentriggerung der Phasenverriegelungsschaltung ergeben sich Ungenauigkeiten der Messung, da das Einrasten einer Phasenverriegelungsschaltung von der zufälligen Phasenlage des empfangenen Signales bezüglich der Phase des in ihr enthaltenen freilaufenden Oszillators abhängt.

Es ist daher die Aufgabe der vorliegenden Erfindung, ein Verfahren der eingangs genannten Art anzugeben, mit dem auf einfache Weise die Genauigkeit der Laufzeitmessung erhöht werden kann. Die Lösung dieser Aufgabe gelingt gemäß den kennzeichnenden Merkmalen des Patentanspruches 1. Weitere vorteilhafte Ausgestaltungen des erfindungsgemäßen Verfahrens sowie eine Vorrichtung zur Durchführung dieses Verfahrens sind den abhängigen Ansprüchen bzw. Anspruch 4 entnehmbar.

Die vorliegende Erfindung macht vorzugsweise von der Aufteilung der Sendezeit in zwei etwa gleich lange Teilzeiten $t_1$ und $t_2$ Gebrauch, wobei der Schallwandler während der Zeit $t_1$ mit der Eigenfrequenz $f_1$ des Schallwandlers erregt wird, während der Schallwandler innerhalb der Zeit $t_2$ mit einer Frequenz $f_1 \pm x\%$ erregt wird. Bei einer angenommenen Bandbreite des Schallwandlers von $f_1 \pm y\%$ und einem Haltebereich der Phasenverriegelungsschaltung von $f_1 \pm z\%$, wobei $x > y$ und $x > z$ ist, ergibt sich folgende Charakteristik des erfindungsgemäßen Verfahrens:

Die abgestrahlte Amplitude der Frequenz $f_1$ steigt nach Sendebeginn auf ihr Maximum. Danach verbleibt die Amplitude auf dem Maximum bis zu dem absichtlich eingeführten Frequenzsprung. Nach dem Frequenzsprung wird die Frequenz des Schallwandlers in Abhängigkeit von dessen Bandbreite mehr oder weniger schnell auf die neue Frequenz $f_2$ gezogen. Da diese Frequenz definitionsgemäß deutlich außerhalb der Eigenfrequenz $f_1$ des Schallwandlers liegt, wird diese Frequenz mit erheblich niedrigerer Amplitude abgestrahlt.

Nach Ablauf der Zeit $t_2$ wird das Senden mit der Frequenz $f_2$ beendet.

Durch Verwendung einer Phasenverriegelungsschaltung beim Empfang und der Detektion ergeben sich im Nahbereich und im Weitbereich des Echoempfangs folgende Eigenschaften: Bei hoher Empfangsamplitude, d.h. bei einem starken Echo infolge eines kurzen Abstandes des Meßobjektes bzw. bei einem gut reflektierenden Meßobjekt rastet die mit einer Leerlauffrequenz $f_1$ betriebene Phasenverriegelungsschaltung zu einem durch die Phasenlage von Echosignal und Leerlauffrequenz bedingten zufälligen Zeitpunkt ein. Bis zum Ende der Zeit $t_1$ bleibt die Phasenverriegelung eingerastet. Wechselt nun das akustische Echo zu der Frequenz $f_2$, so ist die Amplitude des akustischen Echos wesentlich niedriger, kann aber noch ausgewertet werden. Somit wird die Phasenverriegelung bis an die Grenze ihres Haltebereiches nachzuregeln versuchen, dann aber ausrasten. Das Produkt aus Inbandfrequenz und Signalamplitude ist Null, da die empfangene Frequenz außerhalb des Haltebereichs der Phasenverriegelungsschaltung liegt. Das durch die außerhalb des Haltebereiches liegende Frequenz $f_2$ bewirkte Ausrasten ist ein aktives Ausrasten und ein Nachklingen des Schallwandlers findet nicht statt.

Bei mittlerer und kleiner Empfangsamplitude bleibt die Phasenverriegelung ebenfalls bis zum Ende der Zeit $t_1$ eingerastet. Der durch den Frequenzwechsel bewirkte starke Abfall der Amplitude führt beim Empfang zum Abfallen der Empfangsamplitude unter den Rauschpegel. Die Phasenverriegelung rastet nunmehr passiv aus, da das Produkt aus Inbandfrequenz und Signalamplitude wegen zu kleiner Amplitude gegen Null geht.

Anhand der Figuren der beiliegenden Zeichnung sei im folgenden das erfindungsgemäße Verfahren sowie eine Schaltungsanordnung zur Durchführung des Verfahrens näher erläutert. Hierbei zeigen:

Figur 1 den Verlauf eines elektrischen Anregungssignales und der dadurch bewirkten akustischen Abstrahlung des Wandlers;

Figur 2 die gleichen Signale, wobei die akustische Abstrahlung in Abhängigkeit davon veränderlich ist, wie gut die Anpassung an die Eigenfrequenz des Wandlers erfolgt;

Figur 3a den Verlauf zweier elektrischer Anregungssignale mit unterschiedlichen Frequenzen und der dadurch bewirkten akustischen Abstrahlung;

Figur 3b den Verlauf des akustischen Schalldruckes über der Frequenz in bezug auf den Haltebereich der Phasenverriegelungsschaltung;

Figur 4a den Verlauf des akustischen Empfangssignales bei einem Objekt im Nahbereich;

Figur 4b den Verlauf des akustischen Empfangssignales bei einem Objekt im Weitbereich; und

Figur 5 ein Blockschaltbild der erfindungsgemäßen Schaltungsanordnung.

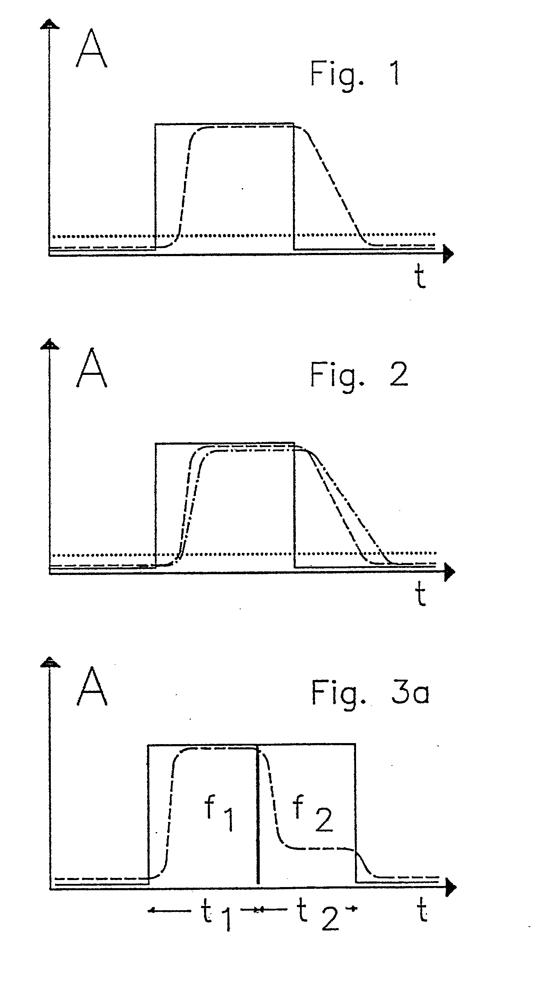

Gemäß Figur 1 ist die Hüllkurve des elektrischen Anregungssignales dargestellt, wobei auf die Darstellung der auf die Eigenfrequenz des Wandlers abgestimmten Trägerfrequenz verzichtet wurde. In gestrichelten Linien ist die akustische Abstrahlung des Wandlers dargestellt und mit einer punktierten Linie ist der Rauschpegel dargestellt, unterhalb dem kein Signalempfang mehr möglich ist. Man erkennt, daß der akustische Wandler nach Beendigung der Fremderregung relativ lange nachklingelt, wobei die Ausgangsamplitude der akustischen Abstrahlung den exponentiellen Verlauf einer bedämpften Schwingung aufweist.

Wird die Eigenfrequenz des akustischen Wandlers leicht verfehlt, was bereits bei geringen Temperaturschwankungen der Fall sein kann, so verändert sich die abfallende Flanke der akustischen Abstahlung unter Umständen sehr markant, was durch die strichpunktierte Linie in Figur 2 dargestellt ist.

Um diese Unwägbarkeiten auszuschalten, wird nun gemäß dem erfindungsgemäßen Verfahren zunächst während einer Zeit t1 mit einer auf die Eigenfrequenz des Wandlers abgestimmten Frequenz $f_1$ der Wandler angesteuert, um so dann unmittelbar darauf den Wandler mit einer Frequenz $f_2$ anzusteuern, die deutlich außerhalb der Eigenfrequenz des Wandlers liegt. Der sich hierdurch ergebende Verlauf der akustischen Abstrahlung ist in Figur 3a gestrichelt eingezeichnet.

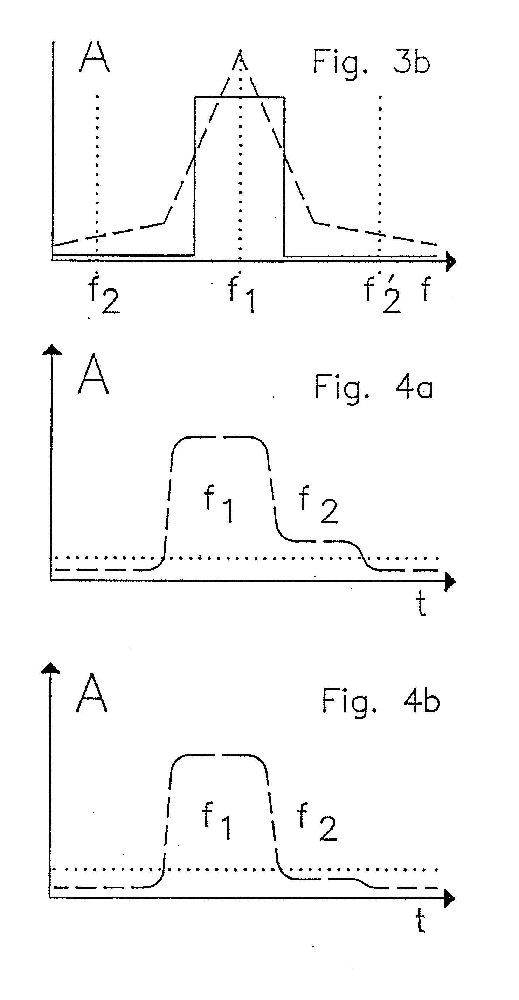

Gemäß Figur 3b ergibt sich bezogen auf die Frequenz ein akustischer Schalldruck, der ein deutliches Maximum bei der Eigenfrequenz $f_1$ des Wandlers aufweist, so daß dieser Schalldruck, wenn der Haltebereich der Phasenverriegelungsschaltung auf diese Eigenfrequenz ebenfalls abgestimmt ist, was gestrichelt angedeutet ist, leicht detektiert werden kann.

Wenn das durch die Schallwellen angestrahlte Meßobjekt im Nahbereich der Sende/Empfangsschaltung liegt, so ergibt sich der in Figur 4a dargestellte Verlauf des akustischen Empfangssignals, wobei die auf die Eigenfrequenz $f_1$ des Wandlers abgestimmten Schallwellen deutlich über dem punktiert eingezeichneten Rauschpegel liegen, während die durch die daneben liegende Frequenz $f_2$ erzeugten Schallwellen eine deutlich verringerte Amplitude aufweisen, aber ebenfalls noch über dem Rauschpegel liegen. Da jedoch die Phasenverriegelungsschaltung frequenzmäßig auf die Eigenfrequenz $f_1$ abgestimmt ist und die Frequenz $f_2$ außerhalb des Haltebereiches liegt, rastet die Phasenverriegelungsschaltung aktiv aus, wenn der Frequenzwechsel erfolgt.

Bei einem Meßobjekt im Weitbereich liegt die Amplitude des akustischen Empfangssignales bei der außerhalb der Eigenfrequenz $f_1$ liegenden Frequenz $f_2$ bereits unter dem Rauschpegel, so daß die Phasenverriegelungsschaltung passiv ausrastet, da diese Amplitude nicht mehr detektierbar ist.

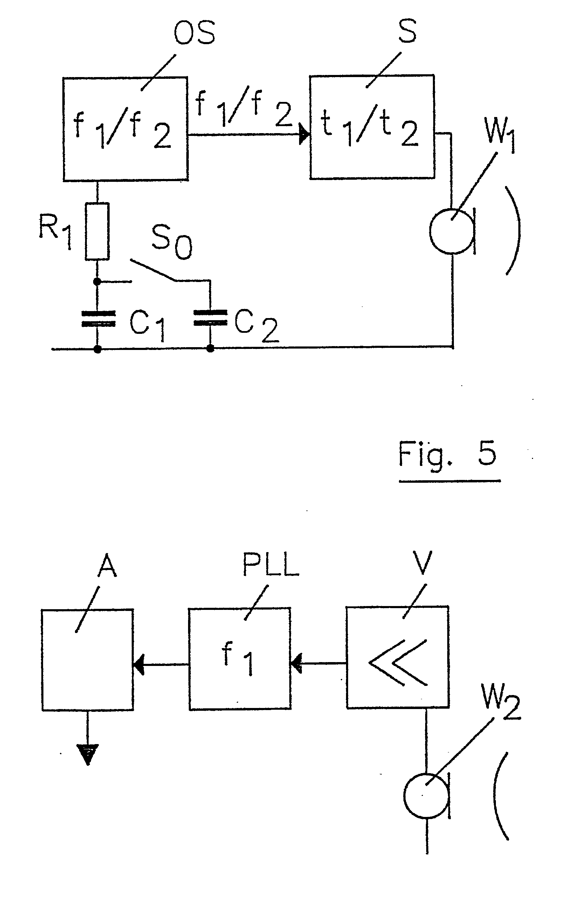

Figur 5 zeigt eine Sende/Empfangsschaltung, mit der das erfindungsgemäße Verfahren verwirklicht werden kann. Maßgebliches Bauteil ist ein in seiner Frequenz umschaltbarer Oszillator OS, wobei z.B. die Anregung in der Eigenfrequenz $f_1$ durch ein RC-Glied bestehend aus dem Widerstand $R_1$ und dem Kondensator $C_1$ bestimmt wird und die deutlich außerhalb der Eigenfrequenz liegende Frequenz $f_2$ erzeugt wird, indem dem Kondensator $C_1$ ein weiterer Kondensator $C_2$ über einen Schalter S0 parallelgeschaltet wird. Ein dem Oszillator OS nachgeschalteter Schalter S wird zyklisch während der Zeiten $t_1$ und $t_2$ geschlossen, so daß der nachgeschaltete

Wandler $W_1$ mit einer entsprechend modulierten Trägerfrequenz während dieser Zeiten angesteuert wird. Das von dem Wandler $W_1$ abgestrahlte akustische Signal wird nach einer nicht dargestellten Reflexion an einem Meßobjekt von einem Wandler $W_2$ empfangen, wobei auch ein einziger Wandler zum Senden und für dem Empfang verwendet werden kann. Das von dem Wandler $W_2$ empfangene akustische Signal wird in ein elektrisches Signal umgesetzt und nach Verstärkung in einem Verstärker V der Phasenverriegelungsschaltung PLL zugeführt. Eine der Phasenverriegelungsschaltung PLL nachgeschaltete Auswerteschaltung A erzeugt so dann ein Stoppsignal, wenn das Ausgangssignal der Phasenverriegelungsschaltung PLL, z.B. von L auf Null umschaltet, da die Empfangsfrequenz außerhalb des Haltebereiches liegt oder die Amplitude des empfangenen Signales unterhalb des Rauschpegels liegt.

## Patentansprüche

1. Verfahren zur Bestimmung der Ankunftszeit eines von einem elektromechanischen Wandler ($W_1$, $W_2$) ausgesendeten und von einem Objekt reflektierten Schallimpulses an dem Wandler, bei dem
- der Wandler während vorgegebener Sendeperioden mit einem impulsmodulierten Schwingungssignal erregt wird,
- die vom Wandler während des Empfangs eines reflektierten Schallimpulses erzeugten elektrischen Ausgangssignale einer auf die Trägerfrequenz des Schwingungssignals abgestimmten Phasenverriegelungsschaltung (PLL) zugeführt werden, und
- die Ankunftszeit anhand des den Verriegelungszustand der Phasenverriegelungsschaltung anzeigenden Ausgangssignals dieser Schaltung bestimmt wird, dadurch gekennzeichnet, daß
- die Trägerfrequenz des Schwingungssignals während jeder Sendeperiode jeweils von einem der Eigenfrequenz des Wandlers entsprechenden und in den Haltebereich der Phasenverriegelungsschaltung fallenden ersten Wert $f_1$ auf einen außerhalb der Eigenfrequenz sowie des Haltebereichs liegenden zweiten Wert $f_2$ umgeschaltet wird, und
- das Ausrasten der Phasenverriegelungsschaltung aus dem verriegelten Zustand festgestellt wird.

2. Verfahren nach Anspruch 1, dadurch gekennzeichnet, daß die Modulationsdauer ($t_1$, $t_2$) beider Trägerfrequenzen ($f_1$, $f_2$) etwa gleich lang gewählt ist.

3. Verfahren nach Anspruch 2, dadurch gekennzeichnet, daß die zweite Trägerfrequenz folgende Größe aufweist:
$$f_2 = f_1 \pm x\%$$
daß die Bandbreite $f_B$ des Wandlers folgenden Wert besitzt:
$$f_B = f_1 \pm y\% \text{ und}$$
daß der Haltebereich $f_H$ der Phasenverriegelungsschaltung folgendermaßen bemessen ist:
$$f_H = f_1 \pm z\%$$
wobei gilt:
$$x > y \text{ und } x > z$$

4. Vorrichtung zur Durchführung des Verfahrens nach Anspruch 1 mit

– einem elektromechanischen Wandler ($W_1$, $W_2$),
– einem impulsmodulierten Oszillator (OS) zur Erregung des Wandlers jeweils während vorgegebener Sendeperioden,
– einer an den Wandler angeschlossenen Empfängerschaltung (V, PLL, A) für das vom Wandler bei Beaufschlagung mit Schallwellen abgegebene elektrische Schwingungssignal, die eine auf die Trägerfrequenz des Oszillatorsignals abgestimmte Phasenverriegelungsschaltung (PLL) sowie eine das Ausgangssignal letzterer Schaltung empfangende Auswerteschaltung (A) zur Bestimmung des Ankunftzeitpunkts eines vom Wandler auf der Trägerfrequenz empfangenen Schallimpulses aufweist, dadurch gekennzeichnet, daß
– der Oszillator (OS) Einrichtungen ($S_0$) zur Umschaltung seiner Trägerfrequenz zwischen einer mit der Eigenfrequenz des Wandlers sowie dem Haltebereich der Phasenverriegelungsschaltung zusammenfallenden ersten Frequenz und einer außerhalb der Eigenfrequenz und des Haltebereichs liegenden zweiten Frequenz aufweist, und
– die Auswerteschaltung (A) zur Erkennung des Ausrastens der Phasenverriegelungsschaltung aus dem verriegelten Zustand ausgebildet ist.

5. Vorrichtung nach Anspruch 4, gekennzeichnet durch einen spannungsgesteuerten Oszillator in der Phasenverriegelungsschaltung, der in seiner Frequenz umschaltbar ist und sowohl im Sende- als auch im Empfangsbetrieb benutzt wird, wobei im Empfangsbetrieb der spannungsabhängige Oszillator der Phasenverriegelungsschaltung (PLL) auf die der Eigenfrequenz des Wandlers ($W_1$, $W_2$) entsprechende Frequenz abgestimmt ist.

**Claims**

1. A method for determining the time of arrival of a sound pulse emitted by an electromechanical transducer ($W_1$, $W_2$) and reflected by an object whereat
– the transducer is energized by a pulse-modulated oscillating signal during predetermined emission periods,
– the electrical output signals generated by the transducer during the reception of a reflected sound pulse are fed to a phase locking circuit (PLL) which is matched to the carrier frequency of the oscillating signal, and
– the time of arrival is evaluated from the output signal of said circuit indicating the locked condition of the phase locking circuit, characterized in that
– the carrier frequency of the oscillating signal during each emission period each is switched from a first value ($f_1$) corresponding to the inherent frequency of the transducer and falling into the locking range to a second value ($f_2$) outside of the inherent frequency as well as outside of the locking range, and
– locking-out the phase locking circuit from the locked condition is determined.

2. Method according to claim 1, characterized in that the modulation period ($t_1$, $t_2$) of both carrier frequencies ($f_1$, $f_2$) has nearly the same duration.

3. Method according to claim 2, characterized in that the second carrier frequency has the following value
$$f_2 = f_1 \pm x\%$$
that the band width $f_B$ of the transducer has the following value
$$f_B = f_1 \pm y\% \text{ and}$$
that the locking range $f_H$ of the phase locking circuit is dimensioned as follows:
$$f_H = f_1 \pm z\%$$
whereat $x > y$ and $x > z$.

4. Apparatus for implementing the method according to claim 1 comprising
– an electromechanical transducer ($W_1$, $W_2$),
– a pulse modulated oscillator (OS) for energizing the transducer during predetermined emission periods
– a receiver circuit (V, PLL, A) connected to the transducer for receiving an electrical oscillating signal from the transducer at its impingement with sound waves, said circuit comprising a phase locking circuit (PLL) matched to the carrier frequency of the oscillating signal and an evaluation circuit (A) receiving the output signal or said phase locking circuit for determining the time of arrival of a sound pulse having that carrier frequency and being received by said transducer, characterized in that
– the oscillator (OS) comprises means ($S_0$) for switching its carrier frequency between a first frequency matched to the inherent frequency of the transducer as well as to the locking range of the phase locking circuit and a second frequency lying outside of said inherent frequency and of said locking range, and
– the evaluation circuit (A) is designed to recognize locking-out of the phase locking circuit from its locked condition.

5. Apparatus according to claim 4, characterized by a voltage controlled oscillator within the phase locking circuit the frequency of which is switchable and which is used in the emitting mode as well as in the receiving mode, whereat in the receiving mode the voltage controlled oscillator of the phase locking circuit (PLL) is matched to the inherent frequency of the transducer ($W_1$, $W_2$).

**Revendications**

1. Procédé de détermination du temps d'arrivée d'une impulsion sonore émise par un transducteur électromécanique ($W_1$, $W_2$) et réfléchie par un objet au transducteur, dans lequel:
– le transducteur est excité pendant des périodes d'émission prédéterminées par un signal d'oscillation modulé par impulsions,
– les signaux électriques de sorti créés par le transducteur pendant la réception d'une impulsion sonore réfléchie sont amenés à un circuit à verrouillage de phase (PLL) accordé avec la fréquence porteuse du signal d'oscillation, et
– le temps d'arrivée est déterminé en fonction du signal de sortie du circuit de verrouillage de phase indiquant l'état de verrouillage de ce circuit, caractérisé en ce que:
– la fréquence porteuse du signal d'oscillation pendant chaque période d'émission commute respectivement d'une première valeur $f_1$ correspondant à la fréquence propre du transducteur et tombant dans la plage de synchronisation du circuit de verrouillage de phase à une deuxième valeur $f_2$ située en dehors de la fréquence propre ainsi que de la plage de synchronisation, et
— la libération du circuit de verrouillage de phase hors de l'état verrouillé est constatée.

2. Procédé selon la revendication 1, caractérisé en ce que la durée de modulation ($t_1$, $t_2$) des deux fréquences porteuses ($f_1$, $f_2$) est choisie à peu près de même longueur.

3. Procédé selon la revendication 2, charactérisé en ce que la deuxième fréquence porteuse présente la grandeur suivante:
$f_2 = f_1 \pm x\%$
que la largeur de bande $f_B$ du transducteur possède la valeur suivante:
$f_B = f_1 \pm y\%$
que la plage de synchronisation $f_H$ du circuit de verrouillage de phase est mesuré comme suit:
$f_H = f_1 \pm z\%$
avec les relations
$x > y$ et $x > z$.

4. Dispositif pour mettre en œuvre le procédé selon la revendication 1 comprenant:
— un transducteur électromécanique ($W_1$, $W_2$),
— un oscillateur modulé par impulsion (OS) pour exciter le transducteur respectivement pendant des périodes d'émission prédéterminées,
— un circuit récepteur (V, PLL, A) raccordé au transducteur pour le signal électrique d'oscillation émis par le transducteur lorsqu'il est frappé par les ondes sonores, circuit qui présente un circuit de verrouillage de phase (PLL) accordé à la fréquence porteuse du signal d'oscillateur ainsi qu'un circuit (A) d'évaluation qui reçoit le signal de sortie de ce dernier circuit pour déterminer l'instant d'arrivée d'une impulsion sonore reçue par le transducteur sur la fréquence porteuse, caractérisé en ce que,
— l'oscillateur (OS) présente des dispositifs ($S_0$) pour commuter sa fréquence porteuse entre une première fréquence qui coïncide avec la fréquence propre du transducteur et la plage de synchronisation du circuit de verrouillage de phase et une deuxième fréquence située en dehors de la fréquence propre ainsi que de la plage de synchronisation, et
— le circuit (A) d'évaluation est constitué de façon à reconnaître la libération du circuit de verrouillage de phase hors de l'état verrouillé.

5. Procédé selon la revendication 4, caractérisé par un oscillateur commandé en tension dans le circuit de verrouillage de phase, qui est commutable dans sa fréquence et qui est utilisé tant en fonctionnement d'émission que de réception, l'oscillateur commandé en tension du circuit de verrouillage de phase (PLL) étant accordé en fonctionnement en réception à la fréquence correspondant à la propre fréquence du transducteur ($W_1$, $W_2$).

EP 0 259 512 B1

Fig. 1

Fig. 2

Fig. 3a

EP 0 259 512 B1

Fig. 3b

Fig. 4a

Fig. 4b

Fig. 5